Europäisches Patentamt

European Patent Office

Office européen des brevets

(11) Numéro de publication: **0 521 747 B1**

## FASCICULE DE BREVET EUROPEEN

(45) Date de publication du fascicule du brevet: **13.12.95**

(51) Int. Cl.6: **C04B 35/80**, C04B 41/82, C04B 41/85, C04B 41/45

(21) Numéro de dépôt: **92401661.1**

(22) Date de dépôt: **16.06.92**

(54) **Procédé pour intégrer de façon homogène une charge solide au sein d'un substrat poreux**

(30) Priorité: **17.06.91 FR 9107393**

(43) Date de publication de la demande:
**07.01.93 Bulletin 93/01**

(45) Mention de la délivrance du brevet:
**13.12.95 Bulletin 95/50**

(84) Etats contractants désignés:
**CH DE FR GB LI**

(56) Documents cités:
EP-A- 0 307 968       EP-A- 0 434 501
WO-A-86/05774       FR-A- 2 365 539
FR-A- 2 508 999       FR-A- 2 626 570
US-A- 4 814 127

(73) Titulaire: **SOCIETE EUROPEENNE DE PROPULSION**
**24, rue Salomon de Rothschild**
**F-92150 Suresnes (FR)**

(72) Inventeur: **Leluan, Jean-Luc**
**28, rue R. Bordier**
**F-33200 Bordeaux (FR)**
Inventeur: **Rey, Jacques**
**2, rue de la Vallère**
**F-33700 Merignac (FR)**
Inventeur: **Bertone, Christian**
**Lot. 29 - Parc de Dehes**
**F-33480 Castelnau de Médoc (FR)**
Inventeur: **Bernard, Bruno**
**Appt 5104-Les Cottages,**
**39, avenue de l'Hippodrome**
**F-33320 Eysines (FR)**

(74) Mandataire: **Joly, Jean-Jacques et al**
**Cabinet Beau de Loménie**
**158, rue de l'Université**
**F-75340 Paris Cédex 07 (FR)**

Rank Xerox (UK) Business Services
(3.10/3.09/3.3.3)

## Description

L'invention a pour objet un procédé permettant d'intégrer de façon sensiblement homogène une charge solide sous forme de particules finement divisées au sein d'un substrat poreux.

Le domaine concerné par l'invention est plus particulièrement celui des matériaux composites comprenant une texture de renfort fibreuse densifiée par une matrice comblant au moins partiellement la porosité initiale de la texture de renfort.

Un procédé connu pour introduire une charge solide au sein d'une texture fibreuse consiste à imprégner celle-ci au moyen d'une composition comprenant la charge solide sous forme de particules finement divisées en suspension dans un véhicule liquide.

Ainsi, il est proposé dans le document EP-A-0 130 105 un procédé de fabrication d'un matériau composite à matrice céramique consistant à imprégner la texture fibreuse de renfort par une barbotine contenant une poudre céramique, puis par une composition fluide d'un précurseur donnant, après traitement thermique, un composé identique à la poudre céramique en suspension dans la barbotine. La matrice céramique est ainsi constituée par la poudre céramique et par le composé issu du précurseur. L'utilisation d'une poudre céramique en suspension dans une barbotine permet de combler une part importante de la porosité de la texture de renfort fibreuse, donc de densifier celle-ci plus rapidement en comparaison avec le processus classique d'imprégnations répétées par un précurseur de la matrice.

Le document FR-A-2 655 977 décrit un procédé du même type dans lequel l'imprégnation par la barbotine contenant la poudre céramique en suspension est réalisée en établissant une différence de pression.

Il est connu aussi du document FR-A-2 626 570 un procédé de fabrication de matériau composite carbone-carbone selon lequel une charge en carbure métallique est introduite dans la matrice carbone. A cet effet, la matrice carbone est obtenue par imprégnation de la texture de renfort en carbone au moyen d'un brai qui constitue un précurseur de la matrice carbone et qui est dopé avec le carbure métallique sous forme de poudre.

Parmi les procédés connus évoqués ci-dessus, ceux utilisant une barbotine contenant une poudre en suspension en vue de densifier la texture fibreuse de renfort ne permettent pas un contrôle de la quantité de poudre intégrée à la texture fibreuse. En effet, celle-ci est généralement placée au-dessus d'un filtre, tandis que la barbotine est admise au-dessus de la texture fibreuse, éventuellement avec établissement d'une différence de pression. La poudre contenue dans la barbotine, et retenue par le filtre, comble progressivement la porosité de la texture fibreuse. L'imprégnation est arrêtée lorsque la poudre recouvre la surface supérieure de la texture. Ainsi, la porosité de la texture fibreuse est autant que possible comblée par la poudre. Une densification partielle par la poudre n'est pas réalisable de façon homogène, la poudre s'accumulant dans la partie de la texture bordée par le filtre.

Quant au procédé consistant à incorporer une charge carbure dans un brai constituant un précurseur de matrice carbone, il ne permet pas d'assurer une répartition homogène de la charge dans la matrice obtenue.

Aussi, que ce soit directement pour la densification d'un substrat poreux par une matrice, ou pour le dopage par une charge solide d'une matrice de densification d'un substrat poreux, la présente invention a pour but de fournir un procédé permettant d'intégrer une charge solide dans un substrat poreux à la fois de façon contrôlée et de façon homogène.

Ce but est atteint au moyen d'un procédé comprenant les étapes qui consistent à :
- préparer une barbotine comportant la charge solide sous forme de particules finement divisées dispersées dans un véhicule liquide,
- placer le substrat dans une enceinte,
- mettre l'enceinte sous vide,
- admettre la barbotine dans l'enceinte, et
- faire passer la barbotine à travers le substrat par différence de pression, procédé dans lequel, conformément à l'invention, l'on force la barbotine à traverser le substrat plusieurs fois, dans un sens et dans l'autre.

Le passage forcé de la barbotine à travers le substrat, dans un sens et dans l'autre, permet de répartir uniformément la charge au sein du substrat.

Le taux de charge introduit dans le substrat est directement lié à la concentration de la barbotine en particules de charge solide, de sorte qu'un contrôle du pourcentage volumique de charge dans le substrat est réalisable en déterminant de façon correspondante la concentration de la barbotine en charge solide.

Avantageusement, le passage forcé de la barbotine à travers le substrat est réalisé de façon simple en commandant le déplacement synchronisé de deux pistons formant deux parois opposées de l'enceinte.

Des exemples de mise en oeuvre de l'invention seront donnés ci-après, à titre indicatif, mais non limitatif en référence aux dessins annexés sur lesquels :
- la figure 1 est une vue schématique en coupe d'une installation permettant la mise en oeuvre du procédé selon l'invention ; et

- les figures 2 et 3 sont des vues en coupe de substrats fibreux dans lesquels une charge solide a été intégrée par imprégnation, respectivement selon un procédé de l'art antérieur et selon le procédé conforme à l'invention.

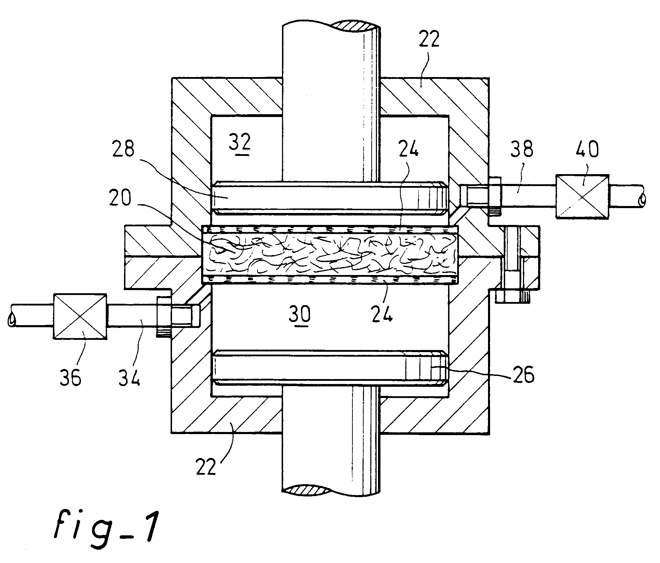

La figure 1 montre une installation permettant d'intégrer une charge solide de façon homogène et contrôlée au sein d'un substrat poreux, en l'espèce une texture fibreuse 20 destinée à constituer la texture de renfort d'une pièce en matériau composite.

La texture fibreuse 20, en forme de disque, est placée dans une enceinte 22, entre deux grilles 24 constituées par des tôles perforées. Des pistons 26, 28 coulissent dans des chambres 30, 32 délimitées par l'enceinte 22 et la texture 20, de chaque côté de celle-ci. Une conduite 34 d'admission de composition d'imprégnation munie d'une vanne d'arrêt 36 aboutit dans une des chambres, par exemple la chambre 30, à travers la paroi de l'enceinte, à proximité immédiate de l'emplacement de la texture 20. Une conduite d'aspiration 38 munie d'une vanne d'arrêt 40 et raccordée à une source de vide (non représentée) aboutit dans l'autre chambre 32, à proximité immédiate de l'emplacement de la texture 20, à travers la paroi de l'enceinte, dans une zone de celle-ci opposée à celle où débouche la conduite 34.

Exemple 1

L'installation illustrée par la figure 1 est utilisée pour réaliser un radôme en matériau composite alumine/alumine.

La texture fibreuse 20 est constituée par un mat de fibres d'alumine commercialisé par la société britannique ICI sous la dénomination mat "Saffil".

La densification de la texture 20 est réalisée au moyen d'une composition d'imprégnation ou barbotine préparée avec les constituants suivants :
- 100 parties en poids de précurseur liquide d'alumine constitué par de l'oxychlorure d'aluminium,
- 70 parties en poids de poudre submicronique d'alumine,
- 15 parties en poids de résine thermoplastique constituée par du polyméthacrylate de méthyle.

Après mise en place de la texture de renfort 20 avec les grilles 24, le vide est établi dans l'enceinte, la vanne 36 étant fermée et la vanne 40 ouverte. Ensuite, la vanne 36 est ouverte pour admettre dans la chambre 30 une quantité déterminée de la composition d'imprégnation. Celle-ci est forcée à traverser la texture de renfort 20 par la dépression qui continue à être exercée dans la chambre 32.

Au bout d'un temps prédéterminé suffisant pour que la texture 20 ait été totalement traversée par la composition d'imprégnation, la vanne 40 est fermée.

Les pistons 26, 28 sont alors mis en synchronisme pour forcer la composition d'imprégnation à traverser deux fois la texture de renfort 20 dans un sens et dans l'autre. De la sorte, une imprégnation homogène de la texture est réalisée.

On notera que les grilles 24 présentent des ouvertures de dimensions largement supérieures à celles des particules d'alumine. Aucune des grilles 24 n'assure une fonction de filtre en vue de retenir les particules d'alumine dans la texture de renfort, le rôle des grilles 24 étant simplement de maintenir la texture de renfort.

La texture de renfort imprégnée, maintenue entre les grilles 24, est extraite de l'enceinte pour être soumise à un cycle de cuisson. Celui-ci consiste à placer la texture de renfort sous presse ou dans un autoclave et à élever la température jusqu'à environ 250 à 300°C de façon progressive et avec des paliers intermédiaires.

Un cycle de céramisation est réalisé dans un four où la température est élevée progressivement jusqu'à 950°C, permettant d'obtenir le radôme en matériau composite alumine/alumine recherché, après stabilisation à 1400°C.

Des mesures effectuées sur plusieurs radômes réalisés de la même façon ont montré que les radômes présentent des mêmes caractéristiques électromagnétiques (permittivité réelle, tangente de perte,...), ce qui indique que la densification a été réalisée de façon reproductible et homogène au sein de la texture de renfort.

Exemple 2

Il s'agit dans cet exemple de réaliser un matériau composite pour disque de frein en carbone/carbone avec intégration d'une charge solide au sein de la matrice.

L'installation illustrée par la figure 1 est utilisée pour intégrer une quantité déterminée de charge solide, par exemple une poudre de carbure de silicium, au sein de la texture de renfort en fibres de carbone, avant de terminer la densification de celle-ci par une matrice en carbone.

La texture fibreuse 20, ou préforme, est constituée par des strates bidimensionnelles en fibres de carbone liées entre elles par aiguilletage. Les strates sont formées de couches de tissu en fibres de carbone. Des couches formées de voile de fibres de carbone peuvent être disposées entre les couches de tissu afin de procurer des fibres qui peuvent être aisément prélevées par les aiguilles, lors de l'aiguilletage, pour être implantées à travers les strates.

L'intégration des particules de carbure de silicium est réalisée par imprégnation au moyen d'une barbotine préparée avec les constituants suivants :

- 21,8 % en masse de poudre de carbure de silicium,
- 0,4 % de défloculant (ester phosphate)
- 51,4 % de méthyl éthyl cétone,
- 26,4 % d'éthanol absolu.

La préforme 20 est mise en place dans l'enceinte 22 et, après établissement d'un vide dans celle-ci, la barbotine ci-dessus est introduite. Comme dans l'exemple 1, on fait parcourir à la barbotine, au moyen des pistons 26, 28, deux trajets aller-retour à travers la préforme. La barbotine résiduelle est récupérée et la texture imprégnée est séchée dans une étuve.

Le pourcentage volumique de charge dans la barbotine, Vcb, est déterminé en fonction du pourcentage volumique de charge désiré dans la préforme Vcp, par la relation :

$$Vcb = 100\ Vcp/(100-V_f),$$

dans laquelle $V_f$ est le pourcentage volumique de fibres dans la préforme, c'est-à-dire le pourcentage du volume apparent de la préforme effectivement occupé par les fibres.

La prise de masse relative théorique de la préforme imprégnée et séchée Mcp est donnée par la relation :

$$Mcp = 100\ (dc.Vcp)/(d_f.V_f),$$

dans laquelle dc et $d_f$ sont respectivement la densité de la charge et la densité de la fibre.

Un essai a été effectué sur une préforme en forme de disque de diamètre 80 mm et d'épaisseur 30 mm, le taux volumique de fibres étant égal à 25.%.

Après séchage, la prise de masse mesurée est de 33 % pour une valeur théorique de 36,6 %.

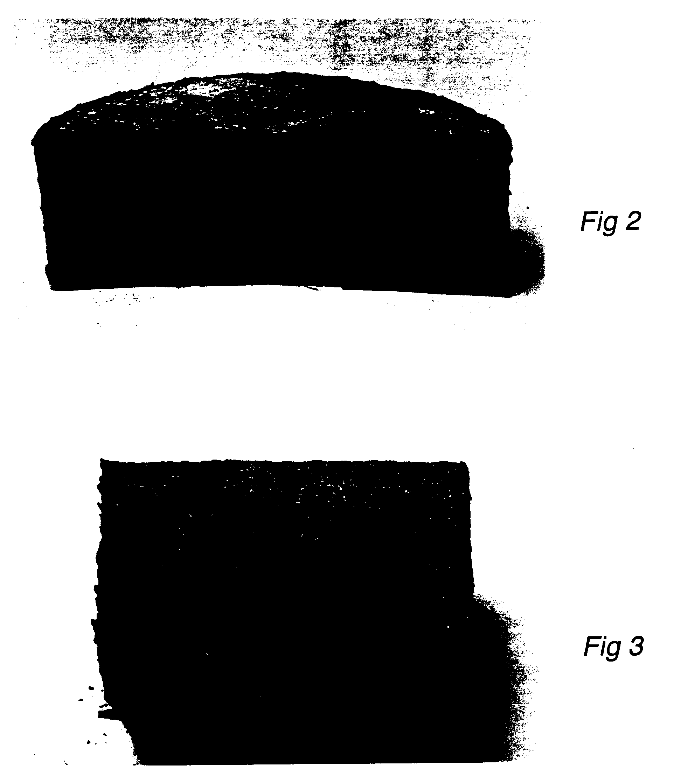

En outre, l'observation en coupe de la préforme imprégnée et séchée (figure 2) montre une répartition homogène de la charge en carbure de silicium dans la préforme.

Le procédé selon l'invention permet ainsi de réaliser une intégration dosée et homogène d'une charge solide au sein d'un substrat poreux.

Exemple comparatif

A titre de comparaison, il est procédé comme dans l'exemple 2 à l'exception du processus d'imprégnation, qui est réalisé sous pression atmosphérique par passage de la barbotine par gravité une seule fois et dans un seul sens à travers la préforme, et des dimensions de la préforme, qui est un parallélépipède de dimensions 55 x 55 x 36 mm.

Après séchage de la préforme imprégnée, l'observation en coupe (figure 3) montre une intégration inhomogène de la charge solide, par contraste avec la figure 2.

Bien entendu, des variantes pourront être apportées aux modes de mise en oeuvre décrits ci-dessus du procédé conforme à l'invention sans sortir du cadre de protection défini par les revendication annexées.

Ainsi, en particulier, il est possible, après avoir placé le substrat poreux dans une enceinte et établi le vide dans l'enceinte, d'admettre la barbotine de chaque côté du substrat avant de réaliser l'imprégnation forcée dans un sens et dans l'autre par des pistons mus en synchronisme.

En outre, l'invention est applicable à l'intégration de charges solides de natures différentes, autres que les poudres céramiques envisagées dans les exemples ci-dessus, et peut être mis en oeuvre sur des substrats qui peuvent être autres que des textures fibreuses.

**Revendications**

1. Procédé pour intégrer de façon homogène une charge solide au sein d'un substrat poreux, comprenant les étapes qui consistent à :
   - préparer une barbotine comportant la charge solide sous forme de particules finement divisées dispersées dans un véhicule liquide,
   - placer le substrat dans une enceinte,
   - mettre l'enceinte sous vide,
   - admettre la barbotine dans l'enceinte, et
   - faire passer la barbotine à travers le substrat par différence de pression, caractérisé en ce que l'on force la barbotine à traverser le substrat plusieurs fois, dans un sens et dans l'autre.

2. Procédé selon la revendication 1, caractérisé en ce que la concentration de la barbotine en charge solide est déterminée en fonction du pourcentage volumique de charge désiré dans le substrat.

3. Procédé selon l'une quelconque des revendications 1 et 2, caractérisé en ce que le véhicule liquide contient un composé organique.

4. Procédé selon l'une quelconque des revendications 1 à 3, caractérisé en ce que l'on force la barbotine à traverser le substrat par déplacement synchronisé de deux pistons formant deux parois opposées de l'enceinte.

## Claims

1. Process for uniformly integrating a solid charge within a porous substrate, comprising the steps of:
   - preparing a slurry containing a solid charge in the form of finely divided particles dispersed in a liquid carrier,
   - placing the substrate inside a enclosure,
   - creating a vacuum inside the enclosure, and
   - causing the slurry to pass through the substrate by means of a pressure difference, characterized in that the slurry is forced to pass through the substrate a plurality of times, in successively opposite directions.

2. Process according to claim 1, characterized in that the concentration of solid charge in said slurry is determined as a function of an intended charge percentage by volume in said substrate.

3. Process according to any one of claims 1 ad 2, characterized in that said liquid carrier contains a organic compound.

4. Process according to any one of claims 1 to 3, the slurry is forced through the substrate by displacing, in synchronism, two pistons forming opposite walls of the enclosure.

## Patentansprüche

1. Verfahren zum homogenen Einbringen eines Feststoffzusatzes in ein poröses Substrat bestehend aus den folgenden Schritten:
   - Herstellen einer Aufschlämmung, die den Feststoffzusatz in Form von fein verteilten, in einem flüssigen Träger dispergierten Partikeln enthält,
   - Einbringen des Substrats in ein Gehäuse,
   - die Beaufschlagung des Gehäuses mit Vakuum,
   - Einleiten der Aufschlämmung in das Gehäuse und
   - Durchströmenlassen der Aufschlämmung durch das Substrat mittels Druckdifferenz,
   **dadurch gekennzeichnet, daß**
   die Aufschlämmung durch das Substrat mehrere Male in der einen und in der anderen Richtung gedrückt wird.

2. Verfahren nach Anspruch 1,
   **dadurch gekennzeichnet, daß**
   die Konzentration der Feststoffzusatz-Aufschlämmung in Abhängigkeit von dem Volumenprozentsatz des Sollzusatzstoffes in dem Substrat bestimmt wird.

3. Verfahren nach Anspruch 1 oder 2,
   **dadurch gekennzeichnet, daß**
   der flüssige Träger eine organische Zusammensetzung enthält.

4. Verfahren nach einem der Ansprüche 1 bis 3,
   **dadurch gekennzeichnet, daß**
   man die Aufschlämmung durch das Substrat durch synchrones Verstellen zweier Kolben drückt, die zwei gegenüberliegende Wände des Gehäuses bilden.

fig_1

Fig 2

Fig 3